# FASCICULE DE BREVET EUROPEEN

(11) **EP 0 702 356 B1**
(45) Date de publication et mention de la délivrance du brevet: **05.07.2000**
(21) Numéro de dépôt: 95402049.1
(22) Date de dépôt: 11.09.1995
(51) Int. Cl.: G11B 5/31

(54) **Tête magnétique à pièces polaires horizontales**
Magnetkopf mit horizontalen Polstücken
Magnetic head with horizontal pole pieces

(30) Priorité: 13.09.1994 FR 9410896
(43) Date de publication de la demande: 20.03.1996
(73) Titulaire: COMMISSARIAT A L'ENERGIE ATOMIQUE, 75015 Paris (FR)
(72) Inventeur: Fedeli, Jean-Marc, F-38400 St. Martin d'Heres (FR); Cuchet, Robert, F-38000 Grenoble (FR); Germain, Céline, F-38170 Seyssinet-Pariset (FR)
(74) Mandataire: Dubois-Chabert, Guy

(56) Documents cités:
- EP-A- 0 472 187
- EP-A- 0 475 397
- FR-A- 2 676 301
- FR-A- 2 687 497
- JP-A- 6 131 635
- US-A- 2 908 770
- US-A- 4 984 118
- IBM TECHNICAL DISCLOSURE BULLETIN, vol. 31, no. 3, NEW YORK US, pages 291-292, 'Film Head Structure Optimized for Writing'
- PATENT ABSTRACTS OF JAPAN vol. 7 no. 121 (P-199) ,25 Mai 1983 & JP-A-58 037830 (FUJITSU K. K.) 5 Mars 1983,

## Description

### Domaine technique

La présente invention a pour objet une tête magnétique à pièces polaires horizontales. Elle trouve une application dans l'enregistrement magnétique.

### Etat de la technique antérieure

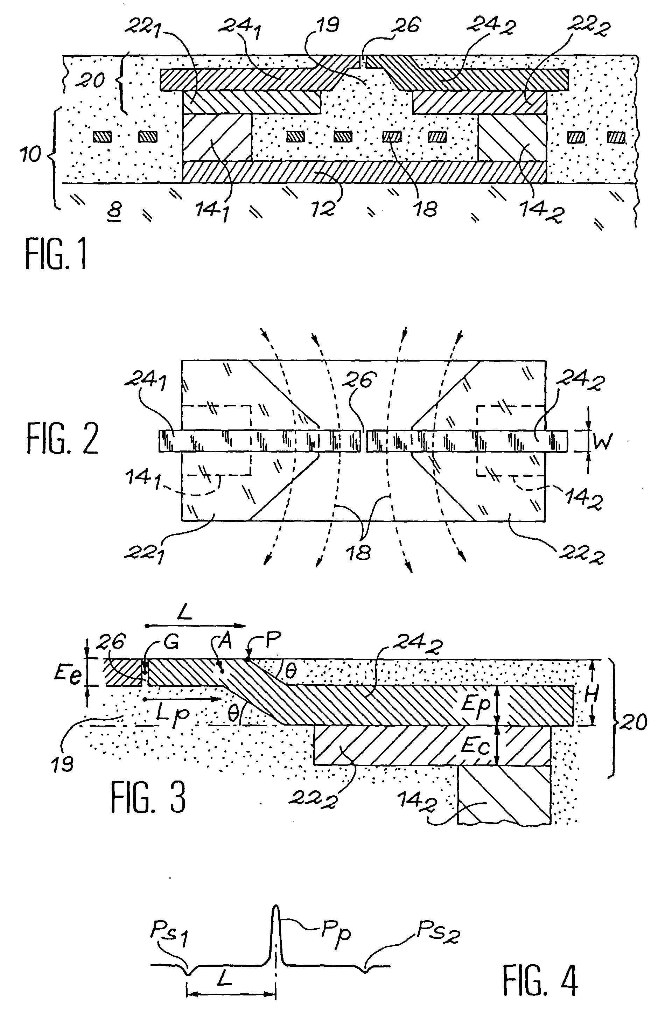

Une tête magnétique est représentée sur la figure 1, en coupe, et sur la figure 2, en vue de dessus. Cette tête comprend, sur un substrat 8, un premier sous-ensemble 10 constitué par une couche magnétique inférieure 12, deux piliers magnétiques 14₁, 14₂ reposant sur la couche magnétique 12 et un enroulement conducteur 18 entourant les piliers 14₁, 14₂. Sur ce sous-ensemble 10, on trouve un relief ou pion central isolant 19 présentant deux flancs inclinés et un sommet plat. Sur le sous-ensemble 10 et chevauchant le relief central isolant 19, on trouve un second sous-ensemble 20 composé de deux parties, une première partie constituée par deux concentrateurs de flux magnétique 22₁, 22₂ avec une extrémité extérieure large en appui sur les piliers 14₁, 14₂ et une extrémité intérieure plus étroite, et une seconde partie constituée par deux pièces polaires 24₁, 24₂ séparées par un entrefer 26 et en contact avec les concentrateurs 22₁, 22₂. Ces pièces polaires présentent une forme de S allongé avec une partie médiane oblique recouvrant les flancs inclinés du pion 19.

La figure 3 montre, de façon détaillée, la moitié droite du second sous-ensemble 20. Cette figure permet de définir quelques dimensions et quelques zones particulières : les pièces polaires ont une épaisseur Ee au niveau de l'entrefer 26 et Ep loin de l'entrefer ; le relief ou pion 19 présente une demi-longueur Lp ; les concentrateurs 22₂ ont une épaisseur Ec ; le plan de vol de la tête est situé à une distance H de la surface supérieure des concentrateurs ; l'angle que fait avec l'horizontale la pièce polaire dans sa partie inclinée est notée θ. Par ailleurs, le point G désigne le centre de l'entrefer, le point A marque la limite de la zone droite d'un pôle ; le point P correspond à la zone où la pièce polaire quitte le plan de vol et devient inclinée.

Une tête de ce type, mais sans concentrateurs, est décrite dans EP-A-0 475 397. Le préambule de la revendication 1 est basé sur ce document.

Si ces têtes donnent satisfaction à certains égards, elles présentent néanmoins des inconvénients lorsque la largeur de la piste d'enregistrement devient faible et la fréquence de fonctionnement grande. On peut analyser ces divers inconvénients de la manière suivante.

Le mode de réalisation des pièces polaires impose une structure monocouche pour celles-ci. A forte épaisseur des pièces polaires, des courants de FOUCAULT apparaissent et créent un échauffement ainsi qu'une diminution de l'efficacité. En réduisant les épaisseurs Ep ainsi que Ec, on réduit cet effet mais au détriment de l'efficacité globale ainsi que du champ maximum obtenu dans l'entrefer en régime de saturation. Il y a donc une limitation minimum et maximum pour l'épaisseur Ep.

Comme représenté sur la figure 4, le signal de lecture présente, mis à part le pic principal Pp, deux petits pics secondaires Ps1, Ps2 situés à une distance d'environ L correspondant au point P de la figure 3 où les pôles ne sont plus dans le plan de vol. La hauteur de ces pics parasites dépend en outre de l'angle θ obtenu lors de la fabrication du relief ou pion.

Afin d'obtenir un champ maximal dans l'entrefer à l'écriture, il y a lieu de rapprocher le point A (point d'apparition de la saturation) de l'entrefer. Il faut alors réduire la demi-longueur Lp du relief sans modifier l'angle optimal θ qui doit rester faible pour assurer la qualité du dépôt magnétique. Cette réduction est délicate pour des longueurs inférieures à 5 µm. De plus, la réalisation de l'entrefer sur un relief de faible longueur devient, elle aussi, très délicate.

On voit donc que la réduction de largeur de piste et l'obtention d'un champ dans l'entrefer plus important nécessitent la diminution de la taille du relief et la conservation d'un angle θ faible. Il s'ensuit des difficultés technologiques de réalisation du relief et de l'entrefer pour les faibles largeurs de piste.

Afin d'éviter les relectures parasites de pistes adjacentes, les pôles doivent présenter une largeur égale à la largeur de la piste à lire et l'introduction d'un concentrateur à section large vers les piliers et à section étroite vers l'entrefer permet de conserver une bonne efficacité. Cependant, une hauteur H relativement importante est nécessaire pour éviter toute relecture en présence de la section large du concentrateur. De plus, à fréquence élevée, l'épaisseur importante Ep+Ec des pièces polaires et du concentrateur est néfaste vis-à-vis des courants de FOUCAULT et il y a lieu de diminuer chaque épaisseur et de découpler magnétiquement les couches.

La présente invention a justement pour but de remédier à ces inconvénients.

### Exposé de l'invention

L'invention modifie la structure du second sous-ensemble référencé 20 sur les figures 1 à 3 de telle sorte que les deux pièces polaires soient horizontales et non plus en forme de S allongé avec une partie médiane oblique. En d'autres termes, les pièces polaires présentent la forme de barreaux droits. Inversement, ce sont les concentrateurs qui présentent une partie inclinée, laquelle vient en appui sur l'un des flancs inclinés du relief ou pion.

Ces dispositions permettent :
- la diminution de la demi-longueur Lp du relief et le rapprochement du point A de l'entrefer et, ainsi, l'obtention d'un champ maximal dans l'entrefer,
- la réalisation d'un entrefer sur une surface plane,
- le rejet du point P à l'origine des pics parasites loin du circuit magnétique principal,
- un meilleur contrôle des pièces polaires qui sont réalisées à plat, en particulier pour ce qui est de la composition et de l'orientation des domaines,
- la réduction de l'épaisseur Ep des pôles (ce qui réduit les courants de FOUCAULT et facilite l'orientation des domaines) sans réduire l'efficacité globale de la tête.

De façon précise, la présente invention a pour objet une tête magnétique telle que définie dans la revendication 1.

### Brève description des dessins

- la figure 1, déjà décrite, montre en coupe une tête magnétique selon l'art antérieur,
- la figure 2, déjà décrite, montre la même tête en vue de dessus,
- la figure 3, déjà décrite, illustre un détail de la pièce magnétique supérieure dans une tête selon l'art antérieur,
- la figure 4 déjà décrite montre la forme du signal de mesure obtenu avec les têtes de l'art antérieur,
- la figure 5 montre, en coupe, une tête magnétique selon la présente invention,
- la figure 6 montre en vue de dessus cette même tête,
- la figure 7 montre un détail de la pièce magnétique supérieure d'une tête selon l'invention,
- les figures 8A, 8B, 8C, 8D, 8E, 8F, 8G, 8H illustrent huit étapes d'un procédé de réalisation de la partie supérieure d'une tête selon l'invention.

### Description de modes particuliers de réalisation

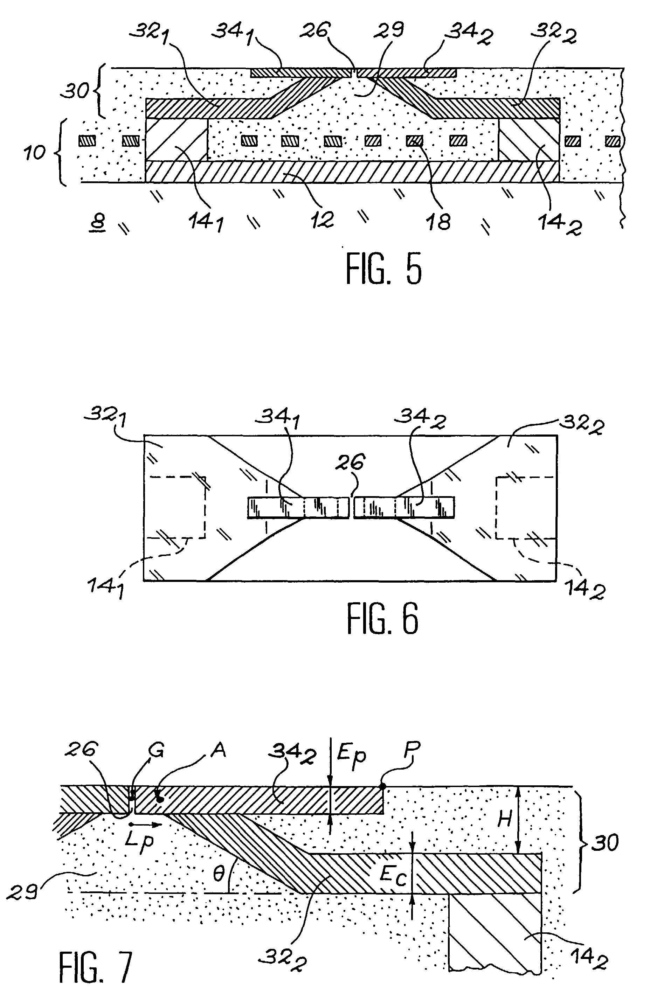

On voit, sur la figure 5, en coupe, et sur la figure 6, en vue de dessus, un mode de réalisation particulier d'une tête magnétique conforme à l'invention. Les éléments déjà représentés sur les figures 1 et 2 portent, pour simplifier, les mêmes références, à savoir le substrat 8, le premier sous-ensemble 10 avec sa couche magnétique 12, ses deux piliers 14₁, 14₂ et son enroulement 18.

Le second sous-ensemble 30 recouvre le relief ou pion 29 et comprend deux concentrateurs 32₁, 32₂ et deux pièces polaires 34₁, 34₂ séparées par un entrefer 26. Les concentrateurs ont leur partie intérieure qui recouvre les flancs inclinés du relief ou pion 29. Ces concentrateurs ont donc une forme brisée. En revanche, les pièces polaires sont droites (ou horizontales).

La figure 7 montre plus en détail la demi-partie droite du second sous-ensemble 30. Elle doit être comparée avec la figure 3 déjà décrite. La distance H a été conservée, ce qui éloigne la partie large des concentrateurs du plan de vol ;le point P a été considérablement reculé ; l'épaisseur Ep et la demi-longueur Lp ont été réduites.

Les figures 8A à 8H représentent huit étapes d'un procédé de réalisation d'une tête conforme à l'invention.

On commence par réaliser un premier sous-ensemble présentant, à sa partie supérieure, deux piliers magnétiques 14₁, 14₂ entourés d'isolant 40 (silice, alumine) (Fig. 8A) . Les opérations permettant de réaliser un tel sous-ensemble sont connues et décrites, par exemple, dans les documents FR-A-2 644 292 et EP-A-0 262 028.

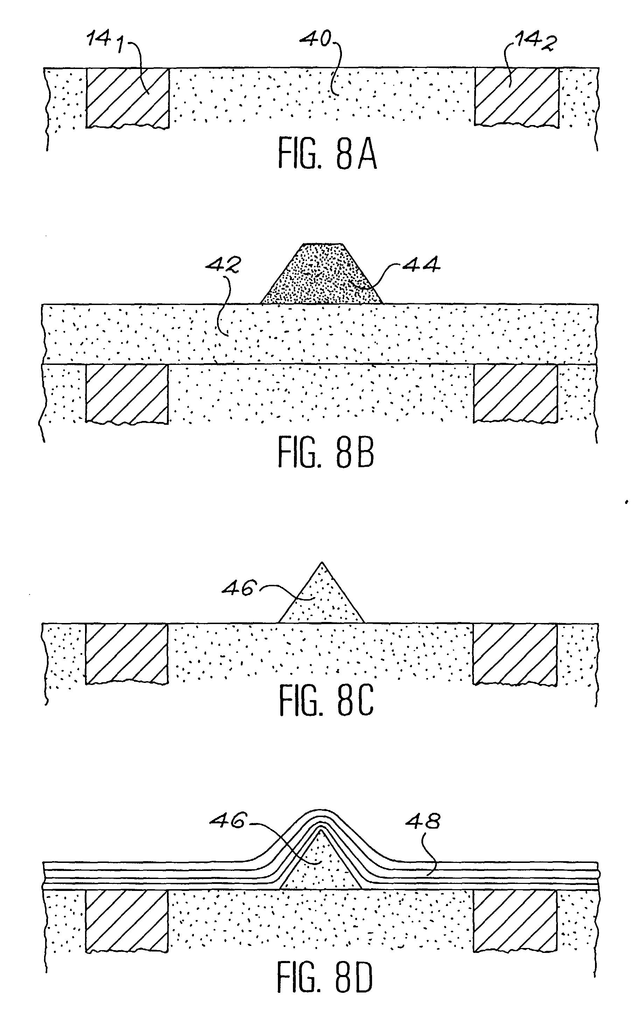

On dépose ensuite une couche d'isolant 42, par exemple en silice, et un masque en résine 44 (Fig. 8B).

On grave la couche isolante 42, par exemple par gravure ionique réactive (RIE), ce qui grave également la résine et laisse subsister un relief à section triangulaire 46 (Fig. 8C).

On effectue ensuite un dépôt d'une couche magnétique 48 sur l'ensemble (Fig. 8D). Il peut s'agir d'une couche feuilletée avec alternance de couches magnétiques (par exemple en FeNi) et de couches isolantes (par exemple en Si₃N₄ ou en SiO₂).

On effectue ensuite une photolithographie et une gravure par usinage ionique pour limiter la couche magnétique à l'aplomb des piliers 14₁, 14₂ (Fig. 8E) et pour lui donner sa forme avec des parties 50₁, 50₂ larges (cf la figure 6) et des parties amincies 51₁, 51₂, lesquelles s'appuient sur les flancs inclinés du relief 46. La forme des concentrateurs a été illustrée sur la figure 6 en vue de dessus.

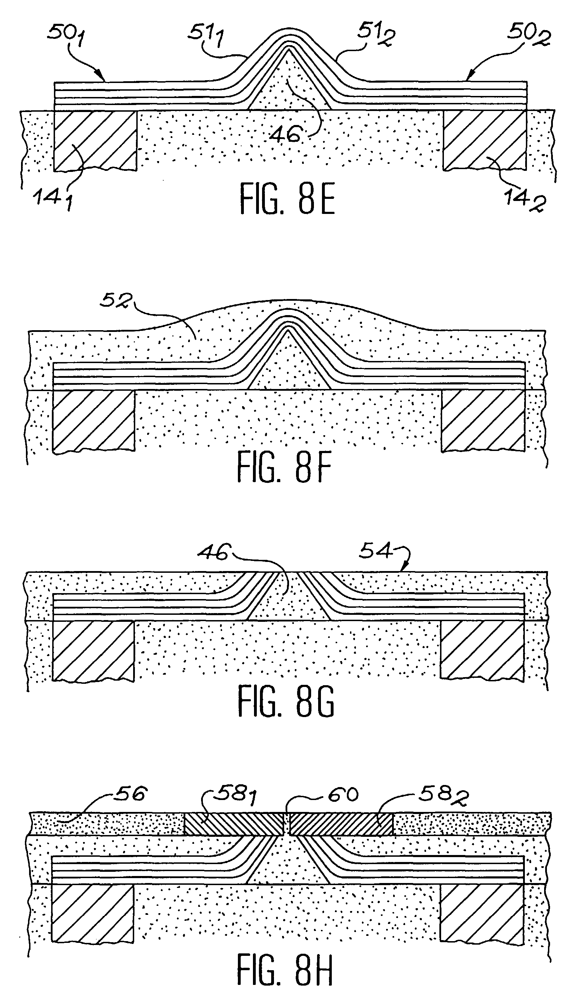

On dépose ensuite sur l'ensemble un isolant épais 52 (Fig. 8F).

On arase l'ensemble obtenu pour former un plan 54 (Fig. 8G) . Cette opération fait apparaître le sommet plat du relief 46.

On termine la tête par le dépôt d'une couche isolante 56 (Fig. 8H) et la formation, dans un caisson réalisé dans cette couche, de deux pièces polaires 58₁, 58₂ en forme de barreau droit, séparées par un entrefer 60.

## Revendications

1. Tête magnétique comprenant :
- un premier sous-ensemble (10) comprenant une couche magnétique inférieure (12), deux piliers magnétiques (14₁, 14₂) reposant sur la couche magnétique (12), un enroulement conducteur (18) entourant les piliers (14₁, 14₂),
- sur ce premier sous-ensemble (10), un relief central isolant (19) présentant deux flancs inclinés et un sommet plat,
- sur ce premier sous-ensemble (10) et chevauchant le relief central isolant (19) un second sous-ensemble (20) comprenant deux pièces polaires (24₁, 24₂) séparées par un entrefer (26),
cette tête étant caractérisée par le fait que le second sous-ensemble (20) comprend en outre deux concentrateurs de flux magnétique (22₁, 22₂) avec une extrémité extérieure large en appui sur les piliers (14₁, 14₂) et une extrémité intérieure plus étroite, les deux concentrateurs (32₁, 32₂) ayant leur extrémité inférieure en appui sur les deux flancs inclinés du relief central isolant (29), lesdites extrémités affleurant sur le sommet du relief (29), les deux pièces polaires étant constituées par deux barreaux droits (34₁, 34₂) en appui sur le sommet plat du relief (30) et sur les extrémités intérieures des deux concentrateurs (32₁, 32₂) les barreaux se prolongeant au-delà desdites extrémités et surplombant lesdits concentrateurs.

## Patentansprüche

1. Magnetkopf, umfassend:
- ein erstes Teilsystem (10) mit einer unteren Magnetschicht (12), zwei auf der Magnetschicht (12) ruhenden magnetischen Säulen (14₁, 14₂), einer die Säulen (14₁, 14₂) umgebenden leitenden Wicklung bzw. Spule (18),
- auf diesem ersten Teilsystem (10) ein zentrales isolierendes Relief (19), das zwei schräge Flanken und eine flache Oberseite aufweist,
- auf diesem ersten Teilsystem (10), über das zentrale isolierende Relief (19) ragend, ein zweites Teilsystem (20), zwei durch einen Spalt (26) getrennte Polstücke (24₁, 24₂) umfassend,
wobei dieser Kopf **dadurch gekennzeichnet** ist, dass das zweite Teilsystem (20) außerdem zwei Magnetflusskonzentratoren (22₁,22₂) mit einem sich auf den Säulen (14₁, 14₂) abstützenden breiten äußeren Ende und einem schmalen inneren Ende umfasst, wobei die beiden Konzentratoren (32₁, 32₂) sich mit ihrem unteren Ende auf den beiden schrägen Flanken des zentralen isolierenden Reliefs (29) abstützen, die beiden Enden mit der Oberseite des Reliefs (29) auf gleicher Höhe sind, und die beiden Polstücke durch zwei geradlinige Stäbe (14₁, 14₂) gebildet werden, die sich auf der flachen Oberseite des Reliefs (30) und auf den inneren Enden der beiden Konzentratoren (32₁, 32₂) abstützen, wobei die Stäbe auf den genannten Konzentratoren über die genannten Enden hinausragen.

## Claims

1. Magnetic head comprising:
- a first subassembly (10) comprising a lower magnetic layer (12), two magnetic pillars (14₁, 14₂) resting on the magnetic layer (12), a conductor winding (18) surrounding the pillars (14₁, 14₂),
- on said first subassembly (10), a central, insulating ridge (19) having two inclined sides and a flat apex,
- on said first subassembly (10) and overlapping the central, insulating ridge (19) a second subassembly (20) comprising two pole pieces (24₁, 24₂), separated by a head gap (26),
- said head being characterized in that the second subassembly (20) also comprises two magnetic flux concentrators (22₁, 22₂) with a wide, outer end bearing on the pillars (14₁, 14₂) and a narrower, inner end, the two concentrators (32₁, 32₂) having their lower end resting on the two inclined sides of the central, insulating relief (29), the two pole pieces being constituted by two straight bars (34₁, 34₂) bearing on the flat apex of the relief (30) and on the inner ends of the two concentrators (32₁, 32₂), the bars being extended beyond said ends and overhanging said concentrators.
